# EUROPEAN PATENT APPLICATION

(11) **EP 4 300 134 A1**
(43) Date of publication of application: **03.01.2024**
(21) Application number: 23180347.9
(22) Date of filing: 20.06.2023
(51) Int. Cl.: G01S 7/481

(54) **RECEIVING DRIVE CIRCUIT, LASER BEAM RECEIVING CIRCUIT AND LIDAR**

(30) Priority: 28.06.2022 CN 202210742726
(71) Applicant: Suteng Innovation Technology Co., Ltd, Shenzhen City Guangdong 518000 (CN)
(72) Inventor: YAN, Zhuozhi, Shenzhen City (CN)
(74) Representative: Ran, Handong

(57) **Abstract**

This application discloses a receiving drive circuit, a laser beam receiving circuit and LiDAR. The receiving drive circuit includes a drive voltage output module, and the drive voltage output module includes: an anode drive voltage output terminal, connected to an anode of a laser beam detector in a laser beam detection module and configured to output a negative anode drive voltage, where an absolute value of the anode drive voltage is less than an absolute value of a reverse breakdown voltage of the laser beam detector; and a cathode drive voltage output terminal, connected to a cathode of the laser beam detector in the laser beam detection module and configured to output a positive cathode drive voltage, where the cathode drive voltage is less than an absolute value of the reverse breakdown voltage, where the anode drive voltage and the cathode drive voltage form a reverse bias voltage with a value greater than the reverse breakdown voltage across two terminals of the laser beam detector, so that the laser beam detector converts the received laser beam signal into a current signal. Compared with a related art, duration of switching to a reverse breakdown state by the laser beam detector can be reduced, thereby improving a response rate of the laser beam detector.

## Description

### TECHNICAL FIELD

This application relates to the field of laser beam detection, and in particular, to a receiving drive circuit, a laser beam receiving circuit and LiDAR.

### BACKGROUND

In an example, a laser beam receiving circuit generally includes a laser beam detector. In order that the laser beam detector can receive an excited laser beam signal reflected back by a detected object and convert the excited laser beam signal into a corresponding current signal, the laser beam detector needs to be reversely broken down.

Currently, a first anode drive voltage is applied to an anode of the laser beam detector, and a value of the first anode drive voltage is greater than a reverse breakdown voltage of the laser beam detector, so that the laser beam detector is in a reverse breakdown state. However, because a first anode drive voltage output by the anode drive circuit to the laser beam detector is usually a high bias voltage with a value of tens of volts, in a process of outputting the first anode drive voltage by the anode drive circuit, the level of the voltage output by the anode drive circuit needs to be continuously increased to reach tens of volts of the final high bias voltage, and it takes a long time for the level of the voltage to be continuously increased, thereby affecting a response rate of the laser beam detector with respect to the received excited laser beam signal and further affecting a rate of outputting a current signal by the laser beam detector.

### SUMMARY

Embodiments of this application provide a receiving drive circuit, a laser beam receiving circuit and LiDAR, which can shorten time from turnoff to reverse breakdown of the laser beam detector, to improve a response speed of the laser beam detector for an excited laser beam signal reflected back from a target detected object.

According to a first aspect, an embodiment of this application provides a receiving drive circuit, applied to a laser beam detection module, where the laser beam detection module includes one or more laser beam detectors, the receiving drive circuit includes a drive voltage output module. The drive voltage output module includes: an anode drive voltage output terminal connected to an anode of a laser beam detector in the laser beam detection module and configured to output an anode drive voltage, wherein the anode drive voltage is a negative voltage, and an absolute value of the negative voltage is less than an absolute value of a reverse breakdown voltage of the laser beam detector; and a cathode drive voltage output terminal, connected to a cathode of the laser beam detector in the laser beam detection module and configured to output a cathode drive voltage, wherein the cathode drive voltage is a positive voltage, and the positive voltage is less than the absolute value of the reverse breakdown voltage, where the anode drive voltage and the cathode drive voltage jointly form a reverse bias voltage across two terminals of the laser beam detector, and an absolute value of the reverse bias voltage is greater than the absolute value of the reverse breakdown voltage of the laser beam detector, so that the laser beam detector converts the received laser beam signal into a current signal.

According to a second aspect, this application provides a laser beam receiving circuit, where the laser beam receiving circuit includes the receiving drive circuit according to any one of the foregoing implementations and a laser beam detection module.

According to a third aspect, this application provides a laser beam receiving circuit, including a laser beam detection module, where the laser beam detection module includes at least one two-dimensional detector array, and the two-dimensional detector array includes M rows and N columns of laser beam detectors, where M and N are positive integers, M≥2, and N≥2; and
the two-dimensional detector array is divided into K detection units along a row direction, each detection unit includes m_{K} rows of laser beam detectors, and each detection unit includes m_{K} laser beam detectors arranged along a column direction in an n^{th} column, where m_{K}^{∗}K=M, K, m_{K} and n are all positive integers, 2≤K<M, 2≤m_{K}<M, and n=1, 2, ..., N; anodes of the m_{K} rows of laser beam detectors in the same detection unit are electrically connected and extended into a shared anode terminal; the m_{K} laser beam detectors respectively included in the K detection units in the n^{th} column are in a one-to-one correspondence, to form m_{K} laser beam detector groups, and the N columns of laser beam detectors of the two-dimensional laser array form m_{K}^{∗}N laser beam detector groups; and cathodes of the m_{K} laser beam detectors in the same laser beam detector group are electrically connected and extended into a shared cathode terminal.

The M shared anode terminals extended from the M rows of laser beam detectors are connected to the drive voltage output module through first switches in a one-to-one correspondence; the N^{∗}m_{K} shared cathode terminals extended from the N columns of laser beam detectors are connected to the drive voltage output module through second switches in a one-to-one correspondence; and the drive voltage output module is configured to form a reverse bias voltage across two terminals of a laser beam detector whose first switch connected to the anode and second switch connected to the cathode are both turned on, and an absolute value of the reverse bias voltage is greater than an absolute value of a reverse breakdown voltage of the laser beam detector, so that the laser beam detector converts a received laser beam signal into a current signal.

According to a fourth aspect, this application provides a LiDAR device, where the LiDAR device includes a laser beam emission circuit and the laser beam receiving circuit according to any one of the foregoing implementations, and the laser beam emission circuit includes:
a laser beam emission module, including one or more laser beam emitters; and
an emission drive circuit, connected to the laser beam emitters in the laser beam emission module and configured to drive the laser beam emitters to emit laser beam signals,
where:
   a laser beam detector is configured to receive a laser beam signal formed after a laser beam signal emitted by the laser beam emitter is reflected by a target object; and
   when the laser beam emission module includes at least one emitter array and the emitter array includes multiple laser beam emitters arranged into an array, the emission drive circuit is configured to perform addressing and driving on the multiple laser beam emitters in the emitter array to emit light; the laser beam detection module includes at least one detector array, and the detector array includes multiple laser beam detectors arranged into an array; and under addressing and driving of the receiving drive circuit, the multiple laser beam detectors in the detector array receive the laser beam signal formed after the laser beam signal emitted by the laser beam emitter is reflected by the target object, and convert the received laser beam signal into a current signal.

Based on the receiving drive circuit, the laser beam receiving circuit and the LiDAR device in the embodiments of this application, a negative anode drive voltage is applied to the anode of the laser beam detector, a positive cathode drive voltage is applied to the cathode of the laser beam detector, and a reverse bias voltage with a value greater than that of the reverse breakdown voltage is obtained by using a voltage difference between the negative anode drive voltage and the positive cathode drive voltage, so that the laser beam detector can be reversely broken down to work in a Geiger mode. In addition, values of the anode drive voltage and the cathode drive voltage are both less than the reverse breakdown voltage. Compared with the related art, time for increasing the voltage level can be reduced when a power supply for providing the anode drive voltage and the cathode drive voltage outputs the anode drive voltage and the cathode drive voltage. Duration of switching of the laser beam detector from a non-reverse breakdown state to a reverse breakdown state can be further reduced, which improves a response speed of the laser beam detector for the excited laser beam signal to output the current signal faster, and improves a frame rate of outputting the current signal by the laser beam detection module. In addition, in the laser beam receiving circuit provided in this application, multiple rows of laser beam detectors are electrically connected and extended into a shared anode terminal, to simultaneously output multiple rows of current signals of the two-dimensional detector array, thereby further improving a reading speed of the current signal.

### BRIEF DESCRIPTION OF THE DRAWINGS

To explain examples of this application or the technical solutions more clearly, the following briefly introduces the drawings that need to be used in the examples or the related art. Obviously, the drawings in the following description are only some examples of this application.
FIG. 1 is a schematic diagram of a framework of a laser beam receiving circuit in a related art;
FIG. 2 is a schematic structural diagram of a framework of a laser beam receiving circuit according to an embodiment of this application;
FIG. 3 is another schematic diagram of a framework of a laser beam receiving circuit according to an embodiment of this application;
FIG. 4 is another schematic structural diagram of a framework of a laser beam receiving circuit according to an embodiment of this application;
FIG. 5 is a schematic circuit diagram of a linear voltage regulator according to an embodiment of this application;
FIG. 6 is a schematic circuit diagram of a laser beam receiving circuit when a laser beam detection module includes a two-dimensional detector array according to an embodiment of this application;
FIG. 7 is another schematic circuit diagram of a laser beam receiving circuit when a laser beam detection module includes a two-dimensional detector array according to an embodiment of this application;
FIG. 8 is a schematic structural diagram of a framework of a signal processing module according to an embodiment of this application; and
FIG. 9 is another schematic structural diagram of a framework of a signal processing module according to an embodiment of this application.

### Reference signs:

1 - laser beam detection module; 2 - anode drive circuit; 3 - processor; 10 - receiving drive circuit; 11 - anode drive voltage output module; 12 - cathode drive voltage output module; 13 - first switch module; 131 - first switch; 14 - second switch module; 142 - second switch; 15 - first current limiting module; 151 - first current limiting resistor; 16 - second current limiting module; 161 - second current limiting resistor; 20 - laser beam detection module; 21 - laser beam detector; 30 - signal processing module; 31 - analog signal processing unit; 311 - transimpedance amplifier; 312 - comparator; 313 - time-to-digital converter; 32 - digital signal processing unit; 33 - signal gating unit; 17 - third current limiting module; 171 - third current limiting resistor; 401 - voltage conversion chip; 4011 - feedback terminal; 4012 - voltage input terminal; 4013 - voltage output terminal; 402 - feedback circuit; R1 - first voltage dividing resistor; and R2 - second voltage dividing resistor.

### DESCRIPTION OF THE INVENTION

To make the objectives, technical solutions, and advantages of this application more comprehensible, the following further describes this application in detail with reference to accompanying drawings and embodiments.

### Embodiment 1

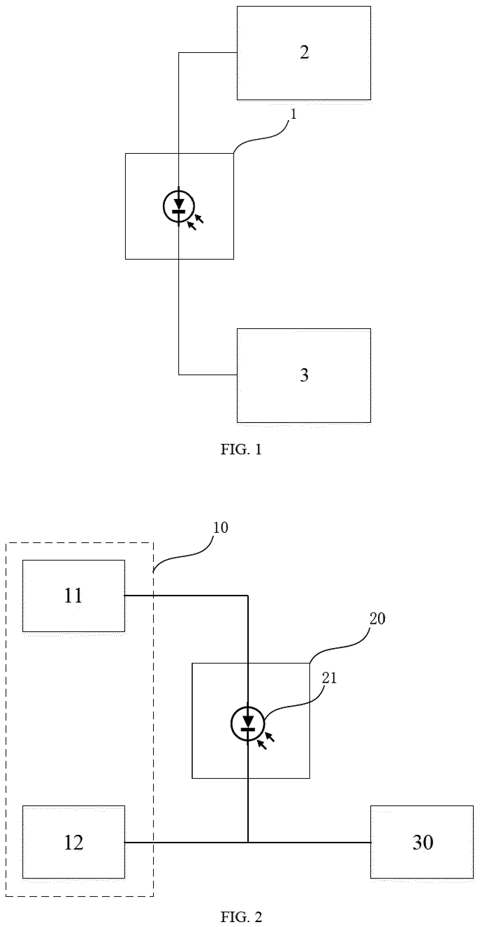

In an example, referring to FIG. 1 and FIG. 2, a laser beam receiving circuit generally includes a laser beam detection module 1, an anode drive circuit 2 and a processor 3. The laser beam detection module 1 includes one or more laser beam detectors; an output terminal of the anode drive circuit 2 is connected to an anode of the laser beam detector in the laser beam detection module 1, and is configured to output a first anode drive voltage, the first anode drive voltage is a negative voltage, and an absolute value of the first anode drive voltage is greater than an absolute value of a reverse breakdown voltage of the laser beam detector in the laser beam detection module 1, so that the laser beam detector 1 is reversely broken down when receiving the first anode drive voltage, and the laser beam detector 1 reversely broken down receives a laser beam signal and outputs a current signal; and the laser beam detector in the laser beam detection module 1 is configured to receive a laser beam signal reflected by a target object, and output the current signal to the processor 3, and the processor 3 analyzes and processes the received current signal, to obtain information such as distance, speed, azimuth, attitude and even shape of the target object, which can be further applied to navigation avoidance, obstacle recognition, ranging, speed measurement, autonomous driving and other scenarios of an automobile, a robot, a logistics vehicle, a patrol vehicle and other products.

In an example, the laser beam receiving circuit applies the first anode drive voltage with a value greater than a reverse breakdown voltage of the laser beam detector to the anode of the laser beam detector through the anode drive circuit 2, so that the laser beam detector is in a reverse breakdown state. When receiving the laser beam signal reflected by the target object, the laser beam detector in the reverse breakdown state can output a current signal to the processor 3. During actual application, a first anode drive voltage output by the anode drive circuit 2 to the laser beam detector is usually a high bias voltage with a value of tens of volts, when the anode drive circuit 2 outputs the first anode drive voltage, a level of the voltage output by the anode drive circuit needs to be continuously increased to reach tens of volts of the final high bias voltage, and it takes a long time for the level of the voltage to be continuously increased, thereby affecting a response rate of the laser beam detector 1 with respect to the received excited laser beam signal and further affecting a rate of outputting a current signal by the laser beam detector 1.

In order to resolve the foregoing problem, referring to FIG. 2 to FIG. 4, a first aspect of this application provides a receiving drive circuit 10, and the receiving drive circuit 10 is applied to a laser beam detection module 20, where the laser beam detection module 20 includes one or more laser beam detectors 21, and the receiving drive circuit 10 is connected to an anode and a cathode of the laser beam detector 21 in the laser beam detection module 20, and is configured to output an anode drive voltage U_{driveA} to the anode of the laser beam detector 21, and is also configured to output a cathode drive voltage U_{driveC} to the cathode of the laser beam detector 21. Herein, the anode drive voltage U_{driveA} is a negative voltage, and an absolute value of the anode drive voltage U_{driveA} is less than an absolute value of a reverse breakdown voltage of the laser beam detector 21; the cathode drive voltage U_{driveC} is a positive voltage, and the cathode drive voltage U_{driveC} is less than an absolute value of the reverse breakdown voltage of the laser beam detector 21; and under joint action of the anode drive voltage U_{driveA} and the cathode drive voltage U_{driveC}, a reverse bias voltage U_{drive} can be formed across two ends of the laser beam detector 21, where U_{drive}=U_{driveA}-U_{driveC} An absolute value of the reverse bias voltage U_{drive} is greater than the absolute value of the reverse breakdown voltage of the laser beam detector 21, so that the laser beam detector 21 whose anode receives the anode drive voltage U_{driveA} and whose cathode receives the cathode drive voltage U_{driveC} is in the reverse breakdown state, and the laser beam detector 21 in the reverse breakdown state receives the laser beam signal reflected by the target object and generates a current signal. The cathode of the laser beam detector 21 is also connected to the input terminal of the signal processing module 30, and outputs the current signal to the signal processing module 30, and the signal processing module 30 analyzes and processes the received current signal, to obtain information such as distance, speed, azimuth, attitude and even shape of the target object, which can be further applied to navigation avoidance, obstacle recognition, ranging, speed measurement, autonomous driving and other scenarios of an automobile, a robot, a logistics vehicle, a patrol vehicle and other products.

The laser beam detector 21 may be the following device: APD (Avalanche Photo Diode), SIPM (Silicon Photomultiplier), SPAD (Single-Photon Avalanche Diode), or the like. Exemplarily, the laser beam detector 21 may be a single-photon array sensor, which consists of multiple Single-Photon Avalanche Diodes, has gains of up to more than 10⁶, can detect a laser beam signal with extremely low power, and is suitable for use in LiDAR. The gain G of the Single-Photon Avalanche Diode is positively correlated with the bias voltage.

In an example, the laser beam detector 21 is the Silicon Photomultiplier (SIPM). As a new photodetection device, the Silicon Photomultiplier has advantages of high photon detection efficiency, fast response, excellent time resolution, and a wide spectral response range. Each Silicon Photomultiplier consists of multiple Avalanche Photo Diode (APD) units (up to hundreds to thousands of APD units, where the specific number of APD units can be designed based on an actual need), each Avalanche Photo Diode unit consists of one Avalanche Photo Diode (APD) and a quenching resistor with large resistance connected in series, and these microelements are connected in parallel to form a plane array. That is, the SIPM consists of a Single-Photon Avalanche Diode (SPAD) array working in Geiger mode, has characteristics of a high gain, high sensitivity, a low bias voltage, insensitivity to a magnetic field, and a compact structure, and therefore, is widely used in the technical field of photodetection.

Optionally, the same reference voltage is referenced for the anode drive voltage U_{driveA} and the cathode drive voltage U_{driveC}, for example, a ground voltage or a voltage at any point in the receiving drive circuit 10. The anode drive voltage U_{driveA} is a negative voltage relative to a reference voltage, and the cathode drive voltage U_{driveC} is a positive voltage relative to the reference voltage. An absolute value of a reverse bias voltage U_{drive} formed by the anode drive voltage U_{driveA} and the cathode drive voltage U_{driveC} is greater than an absolute value of the reverse breakdown voltage of the laser beam detector 21, so that the laser beam detector 21 whose anode receives the anode drive voltage U_{driveA} and whose cathode receives the cathode drive voltage U_{driveC} is in the reverse breakdown state, and the laser beam detector 21 in the reverse breakdown state receives the laser beam signal reflected by the target object and outputs a current signal.

It should be noted that, a voltage at any point in the receiving drive circuit 10 can be used as the reference voltage, and such point may not be an actual point, but is only used to identify a relative polarity relationship between the anode drive voltage U_{driveA} and the cathode drive voltage U_{driveC}. That is, the anode drive voltage U_{driveA} is a negative voltage, the cathode drive voltage U_{driveC} is a positive voltage, the negative voltage is applied to an anode of the laser beam detector 21, and the positive voltage is applied to a cathode of the laser beam detector 21, to form a reverse bias voltage U_{drive} having a value greater than that of the reverse breakdown voltage between the anode and the cathode of the laser beam detector 21.

Compared with the related art, based on the receiving drive circuit 10 provided in this application, a negative anode drive voltage U_{driveA} is applied to the anode of the laser beam detector 21, a positive cathode drive voltage U_{driveC} is applied to the cathode of the laser beam detector 21, and a reverse bias voltage U_{drive} with a value greater than that of the reverse breakdown voltage is obtained by using a voltage difference between the negative anode drive voltage U_{driveA} and the positive cathode drive voltage U_{driveC}, so that the laser beam detector 21 can be reversely broken down to work in a Geiger mode. In addition, values of the anode drive voltage U_{driveA} and the cathode drive voltage U_{driveC} are both less than the reverse breakdown voltage. Compared with the related art, time for increasing the voltage level can be reduced when a power supply for providing the anode drive voltage U_{driveA} and the cathode drive voltage U_{driveC} outputs the anode drive voltage U_{driveA} and the cathode drive voltage U_{driveC}. Duration of switching of the laser beam detector 21 from a non-reverse breakdown state to a reverse breakdown state can be further reduced, which improves a response speed of the laser beam detector 21 for the excited laser beam signal to output the current signal faster, and improves a frame rate of outputting the current signal by the laser beam detection module 20.

As shown in FIG. 2, the receiving drive circuit 10 includes a drive voltage output module, and the drive voltage output module includes an anode drive voltage output terminal and a cathode drive voltage output terminal. Herein, the anode drive voltage output terminal of the drive voltage output module is connected to the anode of the laser beam detector 21 in the laser beam detection module 20, and is configured to output the anode drive voltage U_{driveA}. The cathode drive voltage output terminal of the drive voltage output module is connected to the cathode of the laser beam detector 21 in the laser beam detection module 20, and is configured to output the cathode drive voltage U_{driveC}. The laser beam detector 21 whose anode is connected to the anode drive voltage output terminal of the drive voltage output module and whose cathode is connected to the cathode drive voltage output terminal of the drive voltage output module can be in a reverse breakdown state when receiving the anode drive voltage U_{driveA} at the anode and receiving the cathode drive voltage U_{driveC} at the cathode. The laser beam detector 21 in the reverse breakdown state can output a current signal after receiving a laser beam signal.

As shown in FIG. 2, in an optional embodiment, the drive voltage output module includes an anode drive voltage output module 11 and a cathode drive voltage output module 12. The output terminal of the anode drive voltage output module 11 is connected to the anode of the laser beam detector 21 in the laser beam detection module 20, and is configured to output the anode drive voltage U_{driveA}. The output terminal of the cathode drive voltage output module 12 is connected to the cathode of the laser beam detector 21 in the laser beam detection module 20, and is configured to output the cathode drive voltage U_{driveC}. The laser beam detector 21 whose anode is connected to the output terminal of the anode drive voltage output module 11 and whose cathode is connected to the output terminal of the cathode drive voltage output module 12 can be in a reverse breakdown state when receiving the anode drive voltage U_{driveA} at the anode and receiving the cathode drive voltage U_{driveC} at the cathode. The laser beam detector 21 in the reverse breakdown state can output a current signal after receiving a laser beam signal.

Further, the difference between the absolute value of the reverse breakdown voltage and the absolute value of the anode drive voltage U_{driveA} is greater than 0 and less than the first preset value. Herein, a smaller first preset value indicates that an anode drive voltage U_{driveA} output by the anode drive voltage output module 11 can be closer to the reverse breakdown voltage of the laser beam detector 21. At this time, the cathode drive voltage output module 12 only needs to output a cathode drive voltage U_{driveC} with a smaller value, so that a reverse bias voltage U_{drive} applied on the laser beam detector 21 exceeds the reverse breakdown voltage of the laser beam detector 21, which is convenient for the laser beam detector 21 to switch to the reverse breakdown state and enter the Geiger mode. In addition, compared with the existing art, time for increasing the voltage level can be reduced when a power supply for providing the anode drive voltage U_{driveA} outputs the anode drive voltage U_{driveA}. Duration of switching of the laser beam detector 21 from a non-reverse breakdown state to a reverse breakdown state can be further reduced, which improves a response speed of the laser beam detector 21 for the excited laser beam signal to output the current signal faster, and improves a frame rate of outputting the current signal by the laser beam detection module 20.

Optionally, the anode drive voltage U_{driveA} output by the anode drive voltage output module 11 is a high bias voltage that is close to the reverse breakdown voltage of the laser beam detector 21 and that has a value less than the reverse breakdown voltage. In a specific embodiment, the first preset value is equal to 1 V, that is, a difference between the absolute value of the reverse breakdown voltage and the absolute value of the anode drive voltage U_{driveA} is greater than 0 V and less than 1 V, so that a value of the anode drive voltage U_{driveA} is close to the reverse breakdown voltage but is slightly less than the reverse breakdown voltage.

Further, the cathode drive voltage U_{driveC} output by the cathode drive voltage output module 12 is greater than 0 and less than a second preset value; and the smaller the second preset value, the smaller the cathode drive voltage U_{driveC} output by the cathode drive voltage output module 12, which facilitates adjustment of the gain G of the laser beam detector 21 by adjusting a value of the cathode drive voltage U_{driveC} output by the cathode drive voltage output module 12. In addition, because the cathode drive voltage U_{driveC} is smaller, when a power supply for providing the cathode drive voltage U_{driveC} outputs the cathode drive voltage U_{driveC}, time for increasing the voltage level is relatively short, and duration of switching of the laser beam detector 21 from a non-reverse breakdown state to a reverse breakdown state is further reduced, which improves a response speed of the laser beam detector 21 for the excited laser beam signal to output the current signal faster, and improves a frame rate of outputting the current signal by the laser beam detection module 20.

In an example, the second preset value is greater than the first preset value, so that the reverse bias voltage U_{drive} applied by the anode drive voltage output module 11 and the cathode drive voltage output module 12 to the laser beam detector 21 exceeds the reverse breakdown voltage of the laser beam detector 21, thereby ensuring that the laser beam detector 21 switches to the reverse breakdown state and enters the Geiger mode. In a specific embodiment, the second preset value is equal to 5 V, that is, the cathode drive voltage U_{driveC} output by the cathode drive voltage output module 12 is greater than 0 V and less than 5 V.

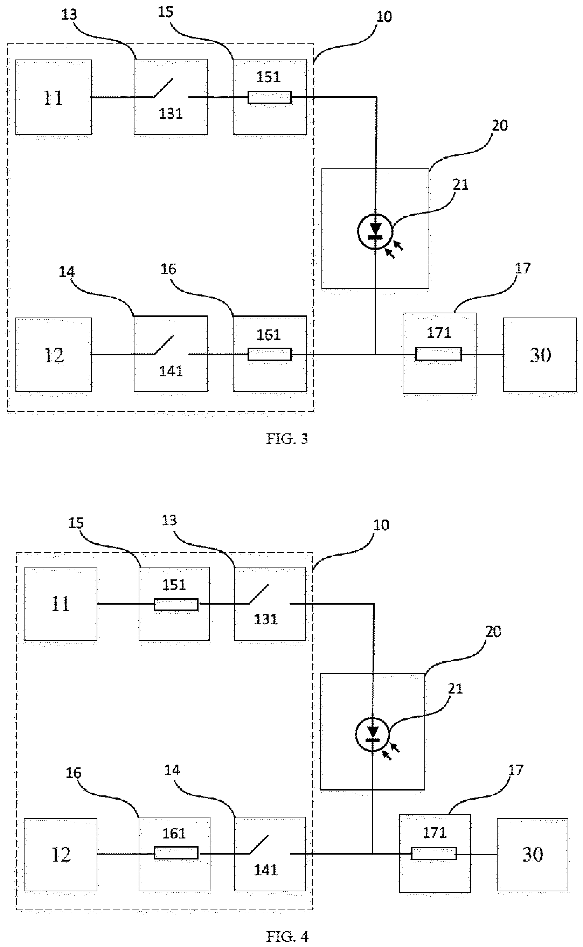

Further, the cathode drive voltage U_{driveC} output by the cathode drive voltage output module 12 is adjustable, and the gain G of the laser beam detector 21 can be adjusted by adjusting the cathode drive voltage U_{driveC}, provided that the cathode drive voltage U_{driveC} is greater than the difference between the absolute value of the reverse breakdown voltage and the absolute value of the anode drive voltage U_{driveA}. In an optional embodiment, a drive voltage output module of the cathode drive voltage U_{driveC} can be a drive voltage output module with any voltage value within a range of 0 V to 5 V, and in a process in which a voltage value of the drive voltage output module of the negative drive voltage U_{driveC} continuously increases from a voltage value close to 0 V to a voltage value close to 5 V, the reverse bias voltage U_{drive} on the laser beam detector 21 can be continuously increased, and then the gain G of the laser beam detector 21 can be continuously increased. As shown in FIG. 3 and FIG. 4, the receiving drive circuit 10 also includes a first switch module 13; the first switch module 13 includes a first switch 131, and the first switch 131 is connected in series between the output terminal of the anode drive voltage output module 11 and the anode of the laser beam detector 21; when the first switch 131 is turned on, the anode of the laser beam detector 21 that is connected to the first switch 131 receives the anode drive voltage U_{driveA}; and when the first switch 131 is disconnected, the anode of the laser beam detector 21 that is connected to the first switch 131 stops receiving the anode drive voltage U_{driveA}.

As shown in FIG. 3 and FIG. 4, the receiving drive circuit 10 also includes a second switch module 14; the second switch module 14 includes a second switch 141, and the second switch 141 is connected in series between the cathode drive voltage output module 12 and the cathode of the laser beam detector 21; when the second switch 141 is turned on, the cathode of the laser beam detector 131 that is connected to the second switch 141 receives the cathode drive voltage U_{driveC}; and when the second switch 141 is disconnected, the cathode of the laser beam detector 131 that is connected to the second switch 141 stops receiving the cathode drive voltage U_{driveC}.

The receiving drive circuit 10 provided in this application controls both the first switch 131 and the second switch 141 to be turned on, to control the laser beam detector 21 whose anode is connected to the first switch 131 and whose cathode is connected to the second switch 141 to receive the anode drive voltage U_{driveA} at the anode, receive the cathode drive voltage U_{driveC} at the cathode, and enter the reverse breakdown state (for SIPM, the reverse breakdown state is the Geiger mode); and by controlling the first switch 131 and/or the second switch 141 to be turned off and the corresponding laser beam detector 21 to be out of the reverse breakdown state, the corresponding laser beam detector 21 is controlled to stop detecting the laser beam signal. That is, the corresponding laser beam detector 21 does not generate a current signal even if the laser beam detector receives the laser beam signal, to facilitate addressable detection of the multiple laser beam detectors 21.

Further, in order to limit a current flowing through the laser beam detector 21 and prevent an excessively large current from being directly transported to the anode of the laser beam detector 21 and the cathode of the laser beam detector 21 and from causing burning of the laser beam detector 21, referring to FIG. 3 and FIG. 4, the receiving drive circuit 10 also includes a first current limiting module 15 and a second current limiting module 16. The first current limiting module 15 includes a first current limiting resistor 151, and the first current limiting resistor 151 is connected in series between the output terminal of the anode drive voltage output module 11 and the anode of the laser beam detector 21, to limit a current when the anode drive voltage output module 11 outputs the anode drive voltage U_{driveA} to the anode of the laser beam detector 21; the second current limiting module 16 includes a second current limiting resistor 161, and the second current limiting resistor 161 is connected in series between the output terminal of the cathode drive voltage output module 12 and the cathode of the laser beam detector 21, to limit a current when the cathode drive voltage output module 12 outputs the cathode drive voltage U_{driveC} to the cathode of the laser beam detector 21; and the laser beam detector 21 is protected via current limitation by using the first current limiting module 15 and the second current limiting module 16.

Further, as shown in FIG. 3 and FIG. 4, a third current limiting module 17 is disposed between the cathode of the laser beam detector 21 and an input terminal of the signal processing module 30, the third current limiting module 17 includes a third current limiting resistor 171, and the third current limiting resistor 171 is connected in series between the cathode of the laser beam detector 21 and the input terminal of the signal processing module 30, to avoid an excessively large output current signal and protect the signal processing module 30. It should be noted that resistance values of the first current limiting resistor 151, the second current limiting resistor 161, and the third current limiting resistor 171 are not specifically limited in this application. The resistance values of the first current limiting resistor 151, the second current limiting resistor 161, and the third current limiting resistor 171 can be set based on an actual situation.

Further, in order to improve stability of outputting the cathode drive voltage U_{driveC} by the cathode drive voltage output module 12, that is, to provide a stable cathode drive voltage U_{driveC} for the cathode of the laser beam detector 21, the cathode drive voltage output module 12 includes a linear voltage regulator, and the linear voltage regulator (low dropout regulator) is configured to subtract an excess voltage from an applied input voltage to generate and output a regulated output voltage as the cathode drive voltage U_{driveC}. In an optional embodiment, the linear voltage regulator included in the cathode drive voltage output module 12 is a low dropout regulator, which facilitates outputting of the cathode drive voltage U_{driveC} lower than the second preset value. A gain G of the laser beam detector 21 can be quickly adjusted by adjusting the voltage value output by the low dropout regulator. In addition, because the cathode drive voltage U_{driveC} output by the low dropout regulator is smaller, increase time of the voltage value is relatively short, and duration of switching of the laser beam detector 21 from a non-reverse breakdown state to a reverse breakdown state is further reduced, which improves a response speed of the laser beam detector 21 for the excited laser beam signal to output the current signal faster, and improves a frame rate of outputting the current signal by the laser beam detection module 20. In addition, the gain of the laser beam detector 21 can be quickly adjusted. The anode drive voltage output module 11, may also include a linear voltage regulator, and output a stable anode drive voltage U_{driveA} through the linear voltage regulator. In some embodiments, either of the cathode drive voltage output module 12 and the drive voltage output module, that is, the anode drive voltage output module 11, may include a linear voltage regulator, or both may include a linear voltage regulator, which may be set based on an actual situation.

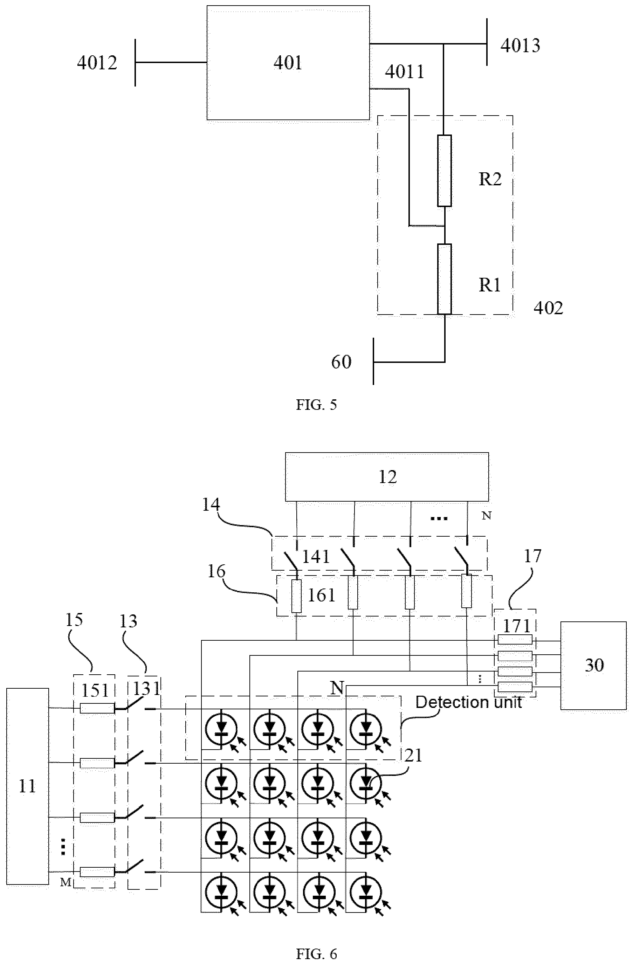

As shown in FIG. 5, in an optional embodiment, the linear voltage regulator may include a voltage conversion chip 401 and a feedback circuit 402. The voltage conversion chip 401 may include a feedback terminal 4011, a voltage input terminal 4012 and a voltage output terminal 4013. The voltage input terminal 4012 is configured to receive the input voltage (direct current voltage) provided by an external power supply, and the voltage output terminal 4013 is configured to output the cathode drive voltage U_{driveC}, the voltage conversion chip 401 can convert a voltage value of an input voltage input into the voltage input terminal 4012 to convert the input voltage into the cathode drive voltage U_{driveC}, and then the voltage output terminal 4013 transports the cathode drive voltage U_{driveC} converted by the voltage conversion chip 401 to the cathode of the laser beam detector 21.

The feedback circuit 402 is configured to receive a feedback signal output by the signal processing module 30 and feed the feedback signal back to the voltage conversion chip 401, so that the voltage conversion chip 401 can convert the input voltage into the cathode drive voltage U_{driveC} required by the cathode of the laser beam detector 21 based on the feedback signal output by the feedback circuit 402. Specifically, the feedback circuit 402 may include a first voltage dividing resistor R1 and a second voltage dividing resistor R2, and the first voltage dividing resistor R1 and the second voltage dividing resistor R2 are connected in series. The first terminal of the first voltage dividing resistor R1 accesses the feedback voltage output by the signal processing module 30, the second terminal of the first voltage dividing resistor R1 is connected to the feedback terminal 4011 and the first terminal of the second voltage dividing resistor R2, and the second terminal of the second voltage dividing resistor R2 is electrically connected to the feedback terminal 4011 of the conversion chip 401. The feedback voltage output by the signal processing module 30 can be divided by the first voltage dividing resistor R1 and the second voltage dividing resistor R2 and then transported to the feedback terminal 4011 of the voltage conversion chip 401. It should be noted that resistance values of the first voltage dividing resistor R1 and the second voltage dividing resistor R2 are not specifically limited, and can be set based on an actual condition.

Further, in an optional embodiment, the laser beam detection module 20 includes at least one two-dimensional detector array, and the two-dimensional detector array includes M rows and N columns of laser beam detectors 21, that is, M*N laser beam detectors 21, where the M*N laser beam detectors 21 are arranged into a two-dimensional array, M and N are both positive integers, M≥2, and N≥2. The M rows of laser beam detectors 21 in the M*N two-dimensional detector array include K detection units arranged in sequence along a row direction, respectively denoted as a first detection unit 211, a second detection unit 212, ..., a K^{th} detection unit 21K. The first detection unit 211 to the K^{th} detection unit 21K each include m_{K} rows and N columns of laser beam detectors 21 (that is, m_{K}^{∗}N laser beam detectors 21), where m_{K}^{∗}K=M, K and m_{K} are both positive integers, 2≤K≤M, and 1≤m_{K}<M. Laser beam detectors 21 in m_{K} rows and N columns included in the k^{th} detection unit 21k correspond to laser beam detectors 21 in [1+(k-1)^{∗}m_{K}]^{th} to k^{∗}m_{K}^{th} rows and an N^{th} column of the laser beam detection module 20 (that is, laser beam detectors 21 in the [1+(k-1)^{∗}m_{K}]^{th} row and the N^{th} column to laser beam detectors 21 the k^{∗}m_{K}^{th} row and the N^{th} column of the laser beam detection module 20), where k is a positive integer, and k=1, 2, ..., K. For example, laser beam detectors 21 in m_{K} rows and N columns included in the first detection unit 211 correspond to laser beam detectors in 1^{st} to m_{K}^{th} rows and an N^{th} column of the laser beam detection module 20, laser beam detectors 21 in m_{K} rows and N columns included in the second detection unit 212 correspond to laser beam detectors in mₖ₊₁^{th} to 2^{∗}m_{K}^{th} rows and the N^{th} column of the laser beam detection module 20, ..., laser beam detectors 21 in m_{K} rows and N columns included in the K^{th} detection unit 21K correspond to laser beam detectors in [1+(K-1)^{∗}m_{K}]^{th} to K^{∗}m_{K}^{th} rows and the N^{th} column of the laser beam detection module 20. Anodes of the laser beam detectors 21 in the m_{K} rows and N columns of the k^{th} detection unit 21k are electrically connected and extended into a shared anode terminal, that is, anodes of the laser beam detectors 21 in the m_{K} rows and N columns in the same detection unit are electrically connected and extended into a shared anode terminal, and a total of K shared anode terminals are extended from the first detection unit 211, the second detection unit 212, ..., the K^{th} detection unit 21K. The n^{th} column of laser beam detectors 21 of the k^{th} detection unit 21k include m_{K} laser beam detectors arranged along a column direction, respectively denoted as 21k_1n, ..., 211_m_{K}n, where n is a positive integer, and n=1, 2, ..., N. For example, the n^{th} column of laser beam detectors 21 of the first detection unit 211 include m_{K} laser beam detectors arranged along the column direction, respectively denoted as 211_1n, ..., 211_m_{K}n, the n^{th} column of laser beam detectors 21 of the second detection unit 212 include m_{K} laser beam detectors arranged along the column direction, respectively denoted as 212_1n, ..., 212_m_{K}n, ..., the n^{th} column of laser beam detectors 21 of the K^{th} detection unit 21K include m_{K} laser beam detectors arranged along the column direction, respectively denoted as 21K_1n, ..., 21K_m_{K}n. The m_{K} laser beam detectors included in laser beam detectors 211_1n to 211_m_{K}n in the n^{th} column of the first detection unit 211, the m_{K} laser beam detectors included in laser beam detectors 212_1n to 212_m_{K}n in the n^{th} column of the second detection unit 212, ..., the m_{K} laser beam detectors included in laser beam detectors 21K_1n to 21K_m_{K}n in the n^{th} column of the K^{th} detection unit are in a one-to-one correspondence, to form m_{K} laser beam detector groups, and each laser beam detector group includes one laser beam detector 21 in the laser beam detectors 211_1n to 211_m_{K}n in the n^{th} column of the first detection unit 211, one laser beam detector 21 in laser beam detectors 212_1n to 212_m_{K}n in the n^{th} column of the second detection unit 212, ..., one laser beam detector 21 in laser beam detectors 21K_1n to 21K_m_{K}n in the n^{th} column of the K^{th} detection unit 21K. Cathodes of the same group of K laser beam detectors 21 in the m_{K} laser beam detector groups formed by the m_{K} laser beam detectors included in the laser beam detectors 211_1n to 211_m_{K}n in the n^{th} column of the first detection unit 211, the m_{K} laser beam detectors included in the laser beam detectors 212_1n to 212_m_{K}n in the n^{th} column of the second detection unit 212, ..., the m_{K} laser beam detectors included in the laser beam detectors 21K_1n to 21K_m_{K}n in the n^{th} column of the K^{th} detection unit are electrically connected and extended into a shared cathode terminal. Further, the m_{K} laser beam detector groups formed by the m_{K} laser beam detectors included in the laser beam detectors 211_1n to 211_m_{K}n in the n^{th} column of the first detection unit 211, the m_{K} laser beam detectors included in the laser beam detectors 212_1n to 212_m_{K}n in the n^{th} column of the second detection unit 212, ..., the m_{K} laser beam detectors included in laser beam detectors 21K_1n to 21K_m_{K}n in the n^{th} column of the K^{th} detection unit are extended into a total of m_{K} shared cathode terminals. Further, the first detection unit 211, the second detection unit 212, ..., the K^{th} detection unit 21K each include N columns of laser beam detectors 21, and N columns of laser beam detectors 21 included in each of the first detection unit 211, the second detection unit 212, ..., the K^{th} detection unit 21K are extended into a total of N^{∗}m_{K} shared cathode terminals.

Specifically, K laser beam detectors corresponding to a q^{th} laser beam detector 211_qn in the n^{th} column of the first detection unit 211, a q^{th} laser beam detector 212_qn in the n^{th} column of the second detection unit 212, ..., a q^{th} laser beam detector 212_qn in the n^{th} column of the K^{th} detection unit 21K form a laser beam detector group, where q is a positive integer, and 1≤q≤m_{K}. For example, K laser beam detectors corresponding to a first laser beam detector 211_1n in the n^{th} column of the first detection unit 211, a first laser beam detector 212_1n in the n^{th} column of the second detection unit 212, ..., a first laser beam detector 212_1n in the n^{th} column of the K^{th} detection unit 21K form a first laser beam detector group. K laser beam detectors corresponding to an m_{K}^{th} laser beam detector 211_m_{K}n in the n^{th} column of the first detection unit 211, an m_{K}^{th} laser beam detector 212_m_{K}n in the n^{th} column of the second detection unit 212, ..., an m_{K}^{th} laser beam detector 21K_m_{K}n in the n^{th} column of the K^{th} detection unit 21K form an m_{K}^{th} laser beam detector group. When n=1, m_{K} laser beam detector groups formed by the first column of laser beam detectors 211_11 to 211_m_{K}1 of the first detection unit 211, the first column of laser beam detectors 212_11 to 212_m_{K}1 of the second detection unit 212, ..., the first column of laser beam detectors 21K_11 to 21K_m_{K}1 of the K^{th} detection unit 21K are extended into a total of m_{K} shared cathode terminals; when n=2, m_{K} laser beam detector groups formed by the second column of laser beam detectors 211_12 to 211_m_{K}2 of the first detection unit 211, the second column of laser beam detectors 212_12 to 212_m_{K}2 of the second detection unit 212, ..., the second column of laser beam detectors 21K_12 to 21K_m_{K}2 of the K^{th} detection unit 21K are extended into a total of m_{K} shared cathode terminals; ..., when n=N, m_{K} laser beam detector groups formed by the N^{th} column of laser beam detectors 211_1N, ..., 211_m_{K}N of the first detection unit 211, the N^{th} column of laser beam detectors 212_1N, ..., 212_m_{K}N of the second detection unit 212, ..., the N^{th} column of laser beam detectors 21K_1N, ..., 21K_m_{K}N of the K^{th} detection unit 21K are extended into a total of m_{K} shared cathode terminals, and then, it can be determined that the first detection unit 211, the second detection unit 212, ..., the K^{th} detection unit 21K jointly form a total of N^{∗}m_{K} laser beam detection groups, and the N^{∗}m_{K} laser beam detector groups are extended into a total of N^{∗}m_{K} shared cathode terminals.

Further, a first switch module 22 includes K first switches 13, and the K shared anode terminals extended from the first detection unit 211, the second detection unit 212... and the K^{th} detection unit 21K are connected to terminals of the K first switches 13 one to one respectively. Other terminals of the K first switches 13 are connected to an output terminal of the anode drive voltage output module 11. That is, a shared anode terminal extended from the k^{th} detection unit 22k is connected to one terminal of the k^{th} first switch 13, and another terminal of the k^{th} first switch 13 is connected to an output terminal of the anode drive voltage output module 11, where k is a positive integer, and k=1, 2, ..., K (same as above). Anode addressing driving is performed on the K detection units connected to the K first switches K1 in a scanning manner by receiving an external anode addressing signal, and K first switches K1 are sequentially controlled to be turned on, to control the K detection units to sequentially access an anode drive voltage. For example, controlling the k^{th} first switch 13 to be turned on can control anodes of laser beam detectors 21 in the m_{K} rows and N columns included in the k^{th} detection unit 22k to access the anode drive voltage. For example, when the anode addressing drive signal received by the k^{th} first switch 13 is at a high level, the k^{th} first switch 13 is turned on under drive of the anode addressing drive signal at the high level, a shared anode terminal extended from the k^{th} detection unit 21k is connected to an output terminal of the anode drive voltage output module 11, and then, by using the k^{th} first switch 13 that is turned on, laser beam detectors 21 in the m_{K} rows and N columns (that is, m_{K}^{∗}N laser beam detectors 21) of the k^{th} detection unit 21k receive the anode drive voltage output by the anode drive voltage output module 11. When the anode addressing drive signal received by the k^{th} first switch 13 is at a low level, the k^{th} first switch 13 is turned off under drive of the anode addressing drive signal at the low level, a shared anode terminal extended from the k^{th} detection unit 21k is disconnected from an output terminal of the anode drive voltage output module 11, and then the laser beam detectors 21 in the m_{K} rows and N columns (that is, m_{K}^{∗}N laser beam detectors 21) of the k^{th} detection unit 21k stops receiving the anode drive voltage.

Further, a second switch module 23 includes N^{∗}m_{K} second switches 14, and terminals of the N^{∗}m_{K} second switches 14 are connected to the N^{∗}m_{K} shared cathode terminals extended from the first detection unit 211, the second detection unit 212, ..., the K^{th} detection unit 21K one to one respectively. Other terminals are connected to an output terminal of the cathode drive voltage output module 12. For example, when at least one second switch 14 connected to at least one of m_{K} shared cathode terminals extended from the laser beam detectors 211_1n, ..., 211_m_{K}n in the n^{th} column of the first detection unit 211, the laser beam detectors 212_1n, ..., 212_m_{K}n in the n^{th} column of the second detection unit 212, ..., the laser beam detectors 21N_1n, ..., 21N_m_{K}n in the n^{th} column of the K^{th} detection unit 21K is turned on, at least one shared cathode terminal is correspondingly connected to the output terminal of the cathode drive voltage output module 12. By using the at least one second switch 14 that is turned on, a cathode of at least one laser beam detector 21 electrically connected to the at least one shared cathode terminal in the laser beam detectors 211_1n, ..., 211_m_{K}n in the n^{th} column of the first detection unit 211, a cathode of at least one laser beam detector 21 electrically connected to the at least one shared cathode terminal in the laser beam detectors 212_1n, ..., 212_m_{K}n in the n^{th} column of the second detection unit 212, ..., a cathode of at least one laser beam detector 21 electrically connected to the at least one shared cathode terminal in the laser beam detectors 21N_1n, ..., 21N_m_{K}n in the n^{th} column of the K^{th} second detection unit 21K receive a cathode drive voltage output by the cathode drive voltage output module 12.

In an optional embodiment, when a q^{th} second switch 14 connected to a q^{th} shared cathode terminal in m_{K} shared cathode terminals extended from the laser beam detectors 211_1n, ..., 211_m_{K}n in the n^{th} column of the first detection unit 211, the laser beam detectors 212_1n, ..., 212_m_{K}n in the n^{th} column of the second detection unit 212, ..., the laser beam detectors 21N_1n, ..., 21N_m_{K}n in the n^{th} column of the K^{th} detection unit 21K is turned on, a cathode of a laser beam detector 211_qn in the q^{th} row and n^{th} column of the first detection unit 211, a cathode of a laser beam detector 212_qn in the q^{th} row and n^{th} column of the second detection unit 212, ..., a cathode of a laser beam detector 21K_qn in the q^{th} row and n^{th} column of the K^{th} detection unit 21K are electrically connected to the output terminal of the cathode drive voltage output module 12 by using the q^{th} second switch 14 that is turned on, to receive a cathode drive voltage, where q is a positive integer, and a=1, 2, ..., m_{K}. In this case, if a k^{th} first switch 13 corresponding to a k^{th} detection unit 21k is turned on, an anode of the laser beam detector 21k_qn in the q^{th} row and n^{th} column of the k^{th} detection unit 21k receives an anode drive voltage output by the anode drive voltage output module 11, a cathode of the laser beam detector 21k_qn in the q^{th} row and n^{th} column of the k^{th} detection unit 21k receives a cathode drive voltage output by the cathode drive voltage output module 12, and the laser beam detector 21k_qn in the q^{th} row and n^{th} column of the k^{th} detection unit 21k is in a reverse breakdown state (Geiger mode) under joint action of a voltage difference (a value of the voltage difference is greater than a reverse breakdown voltage of the laser beam detector 21) between the negative voltage output by the anode drive voltage output module 11 and the positive voltage output by the cathode drive voltage output module 12. After receiving an excited laser beam signal reflected by a target detected object, the laser beam detector 21k_qn in the q^{th} row and n^{th} column of the k^{th} detection unit 21k in the reverse breakdown state outputs a current signal to a signal processing module 30, and the signal processing module 30 analyzes and processes the current signal.

In another optional embodiment, when m_{K} second switches 14 connected to the m_{K} shared cathode terminals extended from the laser beam detectors 211_1n, ..., 211_m_{K}n in the n^{th} column of the first detection unit 211, the laser beam detectors 212_1n, ..., 212_m_{K}n in the n^{th} column of the second detection unit 212, ..., the laser beam detectors 21N_1n, ..., 21N_m_{K}n in the n^{th} column of the K^{th} detection unit 21K are all turned on, cathodes of laser beam detectors 211_1n to 211_m_{K}n in the n^{th} column of the first detection unit 211, cathodes of laser beam detectors 212_1n to 212_m_{K}n in the n^{th} column of the second detection unit 212, ..., cathodes of laser beam detectors 21K_1n to 21K_m_{K}n in the n^{th} column of the K^{th} detection unit 21K are electrically connected to the output terminal of the cathode drive voltage output module 12 by using the m_{K} second switches 14 that are turned on, to receive a cathode drive voltage. That is, cathodes of M laser beam detectors 21 corresponding to the n^{th} column of the laser beam detection module 20 all receive the cathode drive voltage. In this case, if a k^{th} first switch 13 corresponding to a k^{th} detection unit 21k is turned on, anodes of the laser beam detectors 21k_1n to 21k_m_{K}n in the n^{th} column of the k^{th} detection unit 21k receive an anode drive voltage output by the anode drive voltage output module 11, cathodes of the laser beam detectors 21k_1n to 21k_m_{K}n in the n^{th} column of the k^{th} detection unit 21k receive an cathode drive voltage output by the cathode drive voltage output module 12, anodes of the laser beam detectors 21k_1n to 21k_m_{K}n in the n^{th} column of the k^{th} detection unit 21k, that is, laser beam detectors 21 in [1+(k-1)^{∗}m_{K}]^{th} to k^{∗}m_{K}^{th} rows and the n^{th} column of the laser beam detection module 20, receive an anode drive voltage (negative voltage) output by the anode drive voltage output module 11 and cathodes receive cathode drive voltage (positive voltage) output by the cathode drive voltage output module 12, and the laser beam detectors 21 in [1+(k-1)^{∗}m_{K}]^{th} to k^{∗}m_{K}^{th} rows and the n^{th} column of the laser beam detection module 20 are in a Geiger mode under joint action of a voltage difference (a value of the voltage difference is greater than a reverse breakdown voltage of the laser beam detector 21) between the anode drive voltage and the cathode drive voltage. After receiving an excited laser beam signal reflected by a target detected object, the laser beam detectors 21 in [1+(k-1)^{∗}m_{K}]^{th} to k^{∗}m_{K}^{th} rows and the n^{th} column of the laser beam detection module 20 in the Geiger mode output a current signal to a signal processing module 30, and the signal processing module 30 analyzes and processes the current signal.

In another optional embodiment, when N^{∗}m_{K} second switches 14 corresponding to the N^{∗}m_{K} shared cathode terminals extended from the first detection unit 211, the second detection unit 212, ..., the K^{th} detection unit 21K are all turned on, cathodes of M*N laser beam detectors 21 included in the first detection unit 211, the second detection unit 212, ..., the K^{th} detection unit 21K are all electrically connected to the output terminal of the cathode drive voltage output module 12 by using the N^{∗}m_{K} second switches 14 that are turned on, to receive a cathode drive voltage. That is, cathodes of all the laser beam detectors 21 of the laser beam detection module 20 receive the cathode drive voltage. In this case, if a k^{th} first switch 13 corresponding to a k^{th} detection unit 21k is turned on, anodes of all the laser beam detectors 21 in the k^{th} detection unit 21k (that is, a laser beam detector 21 in [1+(k-1)^{∗}m_{K}]^{th} row and the N^{th} column to a laser beam detector 21 in the k^{∗}m_{K}^{th} row and the N^{th} column of the laser beam detection module 20, m_{K} rows and N columns of laser beam detectors 21 in total) receive an anode drive voltage (negative voltage) output by the anode drive voltage output module 11 and cathodes receive an cathode drive voltage (positive voltage) output by the cathode drive voltage output module 12, and the k^{th} detection units 21k are in a Geiger mode under joint action of a voltage difference (a value of the voltage difference is greater than a reverse breakdown voltage of the laser beam detector 21) formed by the anode drive voltage and the cathode drive voltage. After receiving an excited laser beam signal reflected by a target detected object, the k^{th} detection units 21k (that is, a laser beam detector 21 in [1+(k-1)^{∗}m_{K}]^{th} row and the N^{th} column to a laser beam detector 21 in the k^{∗}m_{K}^{th} row and the N^{th} column of the laser beam detection module 20) in the Geiger mode output a current signal to a signal processing module 30, and the signal processing module 30 analyzes and processes the current signal.

Further, the first current limiting module 15 includes K first current limiting resistors 151, and the K first current limiting resistors 151 are respectively connected in series between the output terminal of the anode drive voltage output module 11 and the K shared anode terminals extended from the two-dimensional laser beam detector array.

Further, the second current limiting module 16 includes N* m_{K} second current limiting resistors 161, and the N^{∗}m_{K} second current limiting resistors 161 are respectively connected in series between the output terminal of the cathode drive voltage output module 12 and the N^{∗}m_{K} shared cathode terminals extended from the two-dimensional laser beam detector array.

According to a second aspect, an embodiment of this application also provides a laser beam receiving circuit, where the laser beam receiving circuit includes the foregoing receiving drive circuit 10, the laser beam detection module 20 and a signal processing module 30.

Further, the laser beam detection module 20 includes at least one two-dimensional detector array, and the two-dimensional detector array includes M rows and N columns of laser beam detectors 21, that is, M*N laser beam detectors 21, where the M*N laser beam detectors 21 are arranged into a two-dimensional array, M and N are both positive integers, M≥2, and N≥2. The M rows of laser beam detectors 21 in the M*N two-dimensional detector array include K detection units arranged in sequence along a row direction, respectively denoted as a first detection unit 211, a second detection unit 212, ..., a K^{th} detection unit 21K. The first detection unit 211 to the K^{th} detection unit 21K all include m_{K} rows and N columns of laser beam detectors 21 (that is, m_{K}^{∗}N laser beam detectors 21), where m_{K}^{∗}K=M, K and m_{K} are both positive integers, 2≤K≤M, and 1≤m_{K}<M.

As shown in FIG. 6, in an optional embodiment, m_{K}=1, and K=M; and M rows of laser beam detectors 21 of the two-dimensional detector array include M detection units arranged in sequence along the row direction, respectively denoted as a first detection unit 211, a second detection unit 212, ..., an M^{th} detection unit 21M, and the first detection unit 211, the second detection unit 212, ..., the M^{th} detection unit 21M all include one row and N columns of laser beam detectors 21. Anodes of the laser beam detectors 21 in the same row are electrically connected and extended into a shared anode terminal, and a total of M shared anode terminals are extended from the first detection unit 211, the second detection unit 212, ..., the M^{th} detection unit 21M. Cathodes of the laser beam detectors 21 in the same column are electrically connected and extended into a shared cathode terminal, and the first detection unit 211, the second detection unit 212, ..., the M^{th} detection unit 21M all include N columns of detectors, and are extended into a total of N shared cathode terminals.

Correspondingly, a first switch module 22 includes M first switches 13, and terminals of the M first switches 13 are one-to-one respectively connected to the M shared anode terminals extended from M rows of laser beam detectors 21 in the two-dimensional detector array. Other terminals are all connected to an output terminal of the anode drive voltage output module 11. Anode addressing driving is performed on the M rows of laser beam detectors 21 connected to the M first switches 13 in a scanning manner by receiving an external anode addressing signal, and controlling a specific first switch 13 in the M first switches 13 to be turned on can control anodes of a row of laser beam detectors 21 connected to the first switch 13 to access the anode drive voltage. A second switch module 23 includes N second switches 14, and terminals of the N second switches 14 are one-to-one respectively connected to the N shared cathode terminals extended from N columns of laser beam detectors 21 in the two-dimensional detector array. Other terminals are connected to an output terminal of the cathode drive voltage output module 12. Cathode addressing driving is performed on the N second switches 14 connected to the cathodes of the N columns of laser beam detectors 21 in a scanning manner by receiving an external cathode addressing signal, and controlling a specific second switch 14 in the N second switches 14 to be turned on can control cathodes of a column of laser beam detectors 21 connected to the second switch 14 to access the anode drive voltage.

In an optional solution, when the m^{th} second switch 220 of the M first switches 13 is turned on, the n^{th} second switch 14 of the N second switches 14 is turned on, an anode of a laser beam detector 21ₘₙ in the m^{th} row and n^{th} column in the M*N two-dimensional detector array receives the anode drive voltage, a cathode receives the cathode drive voltage, and the laser beam detector 21ₘₙ is in the Geiger mode under joint action of a voltage difference formed by the anode drive voltage and the cathode drive voltage. After receiving an excited laser beam signal reflected by a target detected object, the laser beam detector 21ₘₙ in the Geiger mode outputs a current signal to a signal processing module 30, and the signal processing module 30 analyzes and processes the current signal, where m is a positive integer, m=1, 2, ..., M, n is a positive integer, and n=1, 2, ..., N. A single first switch 13 and a single second switch K2 are controlled to be turned on, to independently control a specific laser beam detector 21 in the m^{th} row and n^{th} column, thereby performing a two-dimensional addressing operation on the array of laser beam detectors 21. The first switch module 22 and the second switch module 23 can be used to control any laser beam detector 21 to be reversely broken down independently, so that each laser beam detector 21 can be independently controlled, thereby improving flexibility of controlling the array of laser beam detectors 21. In addition, each laser beam detector 21 can be independently controlled to output a current signal thereof, which can not only improve accuracy of outputting the current signal, but also improve resolution of the array of laser beam detectors 21.

In another optional solution, when the m^{th} second switch 220 of the M first switches 13 is turned on, N second switches 14 are turned on sequentially, anodes of the entire m^{th} row of laser beam detectors 21 in the M*N two-dimensional detector array, that is, a total of N laser beam detectors 21, all receive the anode drive voltage, cathodes receive the cathode drive voltage sequentially, and the m^{th} row of laser beam detectors 21 are in the Geiger mode under joint action of a voltage difference formed by the anode drive voltage and the cathode drive voltage. After receiving an excited laser beam signal reflected by the target detected object, the m^{th} row of laser beam detectors 21 in the Geiger mode output a current signal to the signal processing module 30, and the signal processing module 30 analyzes and processes the current signal, where m is a positive integer, and m=1, 2, ..., M (same as above). By controlling the single first switch 13 to be turned on and sequentially controlling all the second switches K2 to be turned on, the entire row of the M*N two-dimensional detector array is controlled, and current signals of the entire row of the M*N two-dimensional detector array are output, which can meet a reading requirement for current signals of the entire row of the laser beam receiving circuit.

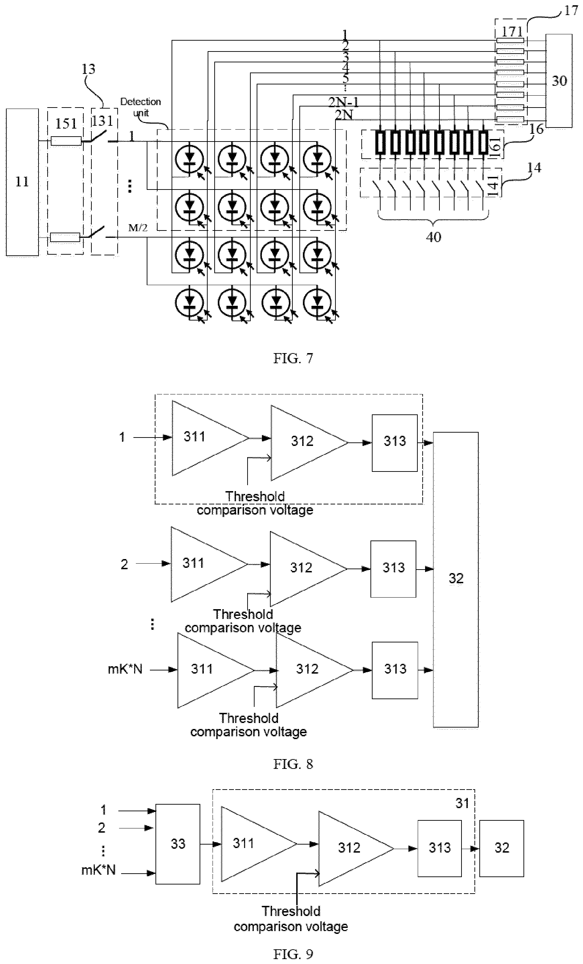

As shown in FIG. 7, in another optional embodiment, m_{K}=2, K=M/2, M is a positive even number, M≥4, and 2≤K<M; a first detection unit 211, a second detection unit 212, ..., a K^{th} detection unit 21K each include two rows and N columns of laser beam detectors 21, and laser beam detectors 21 in the two rows and N columns included in the k^{th} detection unit 21k correspond to laser beam detectors 21 in (2k-1)^{th} to 2k^{th} rows and N^{th} column of the laser beam detection module 20. Anodes of the laser beam detectors 21 in the two rows and N columns in the same detection unit are electrically connected and extended into a shared anode terminal, that is, anodes of the laser beam detectors 21 in the two rows and N columns in the k^{th} detection unit 21k are electrically connected and extended into a shared anode terminal, where k is a positive integer, and k=1, 2, ..., K. A total of K shared anode terminals are extended from the first detection unit 211, the second detection unit 212, ..., the K^{th} detection unit 21K. The laser beam detectors 21 in n^{th} column of the k^{th} detection unit 21k include two laser beam detectors arranged along a column direction, denoted as 21k_1n and 211_2n, where n is a positive integer, and n=1, 2, ..., N. 2 laser beam detectors 211_1n and 211_2n included in the n^{th} column of the first detection unit 211, 2 laser beam detectors 212_1n and 212_2n included in the n^{th} column of the second detection unit 212, ..., 2 laser beam detectors 21K_1n and 21K_2n included in the n^{th} column in the K^{th} detection unit are in a one-to-one correspondence, to form two laser beam detector groups. For example, a laser beam detector 211_1n in a first row and n^{th} column of the first detection unit 211, a laser beam detector 212_1n in a first row and n^{th} column of the second detection unit 212, ..., a laser beam detector 21K_1n in a first row and n^{th} column of the K^{th} detection unit form a first laser beam detector group; and a laser beam detector 211_2n in a second row and n^{th} column of the first detection unit 211, a laser beam detector 212_2n in a second row and n^{th} column of the second detection unit 212, ..., a laser beam detector 21K_2n in a second row and n^{th} column of the K^{th} detection unit form a second laser beam detector group. Each laser beam detector group includes K laser beam detectors, cathodes of the K laser beam detectors are electrically connected and extended into a shared cathode terminal, and the two laser beam detector groups correspond to two shared cathode terminals; and further, the first detection unit 211, the second detection unit 212, ..., the K^{th} detection unit 21K each include N columns of detectors, to form 2N laser beam detector groups and extend into 2N shared cathode terminals.

Correspondingly, a first switch module 22 includes K first switches 13, and terminals of the K first switches 13 are connected to the K shared anode terminals corresponding to the first detection unit 211, the second detection unit 212, ..., the K^{th} detection unit 21K one to one respectively. Other terminals are connected to an output terminal of the anode drive voltage output module 11. That is, one terminal of the k^{th} first switch 13 in the K first switches 13 is connected to a shared anode terminal extended from the k^{th} detection unit 22k, and another terminal is connected to an output terminal of the anode drive voltage output module 11, where k is a positive integer, and k=1, 2, ..., K (same as above). Anode addressing driving is performed on the K detection units connected to the K first switches 13 in a scanning manner by receiving an external anode addressing signal, and controlling a specific first switch 13 in the K first switches 13 to be turned on can control anodes of 2K laser beam detectors 21 included in a detection unit connected to the first switch 13 to access the anode drive voltage. A second switch module 23 includes 2N second switches 14, and terminals of the 2N second switches 14 are connected to the 2N shared cathode terminals extended from the first detection unit 211, the second detection unit 212, ..., the K^{th} detection unit 21K one to one respectively. Other terminals are connected to an output terminal of the cathode drive voltage output module 12. Cathode addressing driving is performed on a laser beam detector 21 included in 2N laser beam detector groups connected to the 2N second switches 14 in a scanning manner by receiving an external cathode addressing signal, and controlling a specific second switch 14 in the 2N second switches 14 to be turned on can control cathodes of K laser beam detectors 21 included in a laser beam detector group connected to the second switch 14 to access the cathode drive voltage.

In an optional embodiment, when the k^{th} first switch 13 (that is, a first switch 13 connected to the k^{th} detection unit 21k) is turned on, and a (2n-1)^{th} second switch 14 (that is, a second switch 14 connected to a laser beam detector 211_1n in the first row and n^{th} column of the first detection unit 211, a laser beam detector 212_1n in the first row and n^{th} column of the second detection unit 212, ..., a laser beam detector 21K_1n in the first row and n^{th} column of the K^{th} detection unit) or a 2n^{th} second switch 14 (that is, a second switch 14 connected to a laser beam detector 211_2n in the second row and n^{th} column of the first detection unit 211, a laser beam detector 212_2n in the second row and n^{th} column of the second detection unit 212, ..., a laser beam detector 21K_2n in the second row and n^{th} column of the K^{th} detection unit) is turned on, by using the k^{th} first switch 13 that is turned on, an anode of the laser beam detector 21k_1n in the first row and n^{th} column of the k^{th} detection unit 21k receives an anode drive voltage output by the anode drive voltage output module 11; and by using the (2n-1)^{th} second switch 14 that is turned on, a cathode receives a cathode drive voltage output by the cathode drive voltage output module 12. Alternatively, by using the k^{th} first switch 13 that is turned on, an anode of the laser beam detector 21k_2n in the second row and n^{th} column of the k^{th} detection unit 21k receives an anode drive voltage output by the anode drive voltage output module 11; and by using the 2n^{th} second switch 14 that is turned on, a cathode receives a cathode drive voltage output by the cathode drive voltage output module 12. The laser beam detector 21k_1n in the first row and n^{th} column of the k^{th} detection unit 21k or the laser beam detector 21k_2n in the second row and n^{th} column of the k^{th} detection unit 21k is in the Geiger mode under joint action of a voltage difference formed by the anode drive voltage and the cathode drive voltage. After receiving an excited laser beam signal reflected by a target detected object, the laser beam detector 21k_1n in the first row and n^{th} column of the k^{th} detection unit 21k or the laser beam detector 21k_2n in the second row and n^{th} column of the k^{th} detection unit 21k in the Geiger mode outputs a current signal to a signal processing module 30, and the signal processing module 30 analyzes and processes the current signal, where k and n are positive integers, k=1, 2, ..., K, and n=1, 2, ..., N (same as above). A single first switch 13 and a single second switch K2 are controlled to be turned on, to independently control a specific laser beam detector 21 of a specific detection unit, thereby performing a two-dimensional addressing operation on the array of laser beam detectors 21. The first switch module 22 and the second switch module 23 can be used to control any laser beam detector 21 to be reversely broken down independently, so that each laser beam detector 21 can be independently controlled, thereby improving flexibility of controlling the array of laser beam detectors 21. In addition, each laser beam detector 21 can be independently controlled to output a current signal thereof, which can not only improve accuracy of outputting the current signal, but also improve resolution of the array of laser beam detectors 21.

In another optional embodiment, when the k^{th} first switch 13 (that is, a first switch 13 connected to the k^{th} detection unit) is turned on or odd-numbered second switches 14 in the 2N second switches 14, that is, the first second switch 14, the third second switch 14, ..., the (2N-1)^{th} second switch 14 (that is, N second switches 14 connected to N columns of laser beam detectors 211_11, 211_12, ..., 211_1N corresponding to the first row of the first detection unit 211, N columns of laser beam detectors 212_11, 212_12, ..., 212_1N corresponding to the first row of the second detection unit 212, ..., N columns of laser beam detectors 21K_11, 21K_12, ..., 21K_1N corresponding to the first row of the K^{th} detection unit), are turned on, or when even-numbered second switches 14 in the 2N second switches 14, that is, the 2^{nd} second switch 14, the 4^{th} second switch 14, ..., the 2N^{th} second switch 14 (that is, N second switches 14 connected to N columns of laser beam detectors 211_21, 211_22, ..., 211_2N corresponding to the second row of the first detection unit 211, N columns of laser beam detectors 212_21, 212_22, ..., 212_2N corresponding to the second row of the second detection unit 212, ..., N columns of laser beam detectors 21K_21, 21K_22, ..., 21K_2N corresponding to the second row of the K^{th} detection unit), are turned on, by using the k^{th} first switch 13 that is turned on, anodes of the N columns of laser beam detectors 21 corresponding to the first row of the k^{th} detection unit (that is, a (2k-1)^{th} row of laser beam detectors 21 of the laser beam detection module 20) receive an anode drive voltage output by the anode drive voltage output module 11; and by using the N odd-numbered second switches 14 that are turned on, cathodes receive a cathode drive voltage output by the cathode drive voltage output module 12. Alternatively, by using the k^{th} first switch 13 that is turned on, anodes of the N columns of laser beam detectors 21 corresponding to the second row of the k^{th} detection unit (that is, a 2k^{th} row of laser beam detectors 21 of the laser beam detection module 20) receive an anode drive voltage output by the anode drive voltage output module 11; and by using the N odd-numbered second switches 14 that are turned on, cathodes receive a cathode drive voltage output by the cathode drive voltage output module 12. A (2k-1)^{th} row of laser beam detectors 21 in the M*N two-dimensional detector array or the (2k-1)^{th} row of laser beam detectors 21 of the laser beam detection module 20 is in the Geiger mode under joint action of a voltage difference formed by the anode drive voltage and the cathode drive voltage. After receiving an excited laser beam signal reflected by the target detected object, the (2k-1)^{th} row of laser beam detectors 21 and the 2k^{th} row of laser beam detectors 21 in the Geiger mode output a current signal to the signal processing module 30, and the signal processing module 30 analyzes and processes the current signal, where k is a positive integer, k=1, 2, ..., K, n is a positive integer, and n=1, 2, ..., N. By controlling the single first switch 13 and all the second switches 14 connected to the entire row of laser beam detectors 21 to be turned on, the entire row of the M*N two-dimensional detector array is controlled, and current signals of the entire row of the M*N two-dimensional detector array are output, which can meet a reading requirement for current signals of the entire row of the laser beam receiving circuit and improve a reading speed of the current signal.

In another optional embodiment, when the k^{th} first switch 13 (that is, a first switch 13 connected to the k^{th} detection unit) is turned on and the 2N second switches 14 are turned on sequentially, by using the k^{th} first switch 13 that is turned on, anodes of N columns of laser beam detectors 21 corresponding to the first row of the k^{th} detection unit (that is, the (2k-1)^{th} row of laser beam detectors 21 of the laser beam detection module 20) and N columns of laser beam detectors 21 corresponding to the second row of the k^{th} detection unit (that is, the 2k^{th} row of laser beam detectors 21 of the laser beam detection module 20) receive the anode drive voltage output by the anode drive voltage output module 11, and by using the 2N second switches 14 that are turned on sequentially, cathodes receive a cathode drive voltage output by the cathode drive voltage output module 12. The (2k-1)^{th} row of laser beam detectors 21 in the M*N two-dimensional detector array or the (2k-1)^{h} row of laser beam detectors 21 of the laser beam detection module 20 is in the Geiger mode under joint action of a voltage difference formed by the anode drive voltage and the cathode drive voltage. After receiving an excited laser beam signal reflected by the target detected object, the (2k-1)^{th} row of laser beam detectors 21 and the 2k^{th} row of laser beam detectors 21 in the Geiger mode output a current signal to the signal processing module 30, and the signal processing module 30 analyzes and processes the current signal, where k is a positive integer, k=1, 2, ..., K, n is a positive integer, and n=1, 2, ..., N. By connecting anodes of every two adjacent rows of lasers in the two-dimensional detector array to a first switch 13, current signals of two rows of the two-dimensional detector array are output, and the reading speed of the current signal is further improved.

In another optional embodiment, m_{K}>2, K=M/m_{K}, and M>4, that is, a first detection unit 211, a second detection unit 212, ..., a K^{th} detection unit 21K each include at least three rows of laser beam detectors 21, and laser beam detectors 21 in the m_{K} rows and N columns included in the k^{th} detection unit 21k correspond to laser beam detectors 21 in (m_{K}^{∗}k-1)^{th} and m_{K}^{∗}k^{th} rows and N^{th} column of the laser beam detection module 20. Anodes of the laser beam detectors 21 in the m_{K} rows and N columns in the same detection unit are electrically connected and extended into a shared anode terminal, that is, anodes of the laser beam detectors 21 in the m_{K} rows and N columns in the k^{th} detection unit 21k are electrically connected and extended into a shared anode terminal, where k is a positive integer, and k=1, 2, ..., K. A total of K shared anode terminals are extended from the first detection unit 211, the second detection unit 212, ..., the K^{th} detection unit 21K. The laser beam detectors 21 in n^{th} column of the k^{th} detection unit 21k include m_{K} laser beam detectors arranged along a column direction, denoted as 21k_1n, 21k_2n, ..., 21k_m_{K}n, where m_{K} and n are both positive integers, m_{K}>2, and n=1, 2, ..., N. Herein, m_{K} laser beam detectors 211_1n, 211_2n, ..., 211_m_{K}n included in the n^{th} column of the first detection unit 211, m_{K} laser beam detectors 212_1n, 212_2n, ..., 212_m_{K}n included in the n^{th} column of the second detection unit 212, ..., m_{K} laser beam detectors 21K_1n, 21K_2n, ..., 21K_m_{K}n included in the n^{th} column in the K^{th} detection unit are in a one-to-one correspondence, to form m_{K} laser beam detector groups. Cathodes of the laser beam detectors 21 in the same laser beam detector group are electrically connected and extended into a shared cathode terminal. Each column of laser beam detectors 21 include m_{K} laser beam detector groups, which are extended into a total of m_{K} shared cathode terminals; and further, the two-dimensional detector array includes N columns of detectors, to form m_{K}^{∗}N laser beam detector groups and extend into a total of m_{K}^{∗}N shared cathode terminals.

As shown in FIG. 6 and FIG. 7, the laser beam detection module 20 includes m_{K}^{∗}N current signal output terminals, and the m_{K}^{∗}N current signal output terminals are respectively m_{K}^{∗}N shared cathode terminals extended from the two-dimensional detector array; and the signal processing module 30 is connected to the m_{K}^{∗}N shared cathode terminals extended from the two-dimensional detector array, and is used for analyzing and processing the current signal output by the laser beam detection module 20.

As shown in FIG. 8, in an optional embodiment, the signal processing module 30 includes m_{K}^{∗}N analog signal processing circuits 31 and one digital signal processing circuit 32; input terminals of the m_{K}^{∗}N analog signal processing circuits 31 are respectively in a one-to-one correspondence with m_{K}^{∗}N shared cathode terminals extended from a two-dimensional detector array, and output terminals are all connected to the digital signal processing circuit 32. As shown in FIG. 9, in another optional embodiment, the signal processing module 30 includes a signal gating unit 33, an analog signal processing circuit 31, and a digital signal processing circuit 32 that are sequentially connected; an input terminal of the signal gating unit 33 is connected to the m_{K}^{∗}N shared cathode terminals extended from the two-dimensional detector array, and an output terminal is connected to the input terminal of the analog signal processing circuit 31; and an output terminal of the analog signal processing circuit 31 is connected to the input terminal of the digital signal processing circuit 32.

In another optional embodiment, the laser beam detection module 20 includes a laser beam detector 21; and the laser beam detection module 20 includes a current signal output terminal, and the current signal output terminal is the cathode of the laser beam detector 21. The signal processing module 30 includes an analog signal processing circuit 31 and a digital signal processing circuit 32 connected in sequence.

The signal gating unit 33 is configured to select, by time, one current signal output by m_{K}^{∗}N shared cathode terminals and output the current signal to the analog signal processing circuit 31. The analog signal processing circuit 31 is configured to amplify a current signal output by the laser beam detection module 20 and convert the current signal into an analog voltage signal, and is also configured to compare the analog voltage signal with a preset threshold comparison voltage and then output a digital signal to a digital signal processing circuit 32 for analysis and processing. The digital signal processing circuit 32 is configured to analyze and process the digital signal, to obtain information such as distance, speed, azimuth, attitude and even shape of the target object, which can be further applied to navigation avoidance, obstacle recognition, ranging, speed measurement, autonomous driving and other scenarios of an automobile, a robot, a logistics vehicle, a patrol vehicle and other products.

Further, referring to FIG. 8 and FIG. 9, the analog signal processing circuit 31 includes a transimpedance amplifier (TIA) 311, a comparator 312, and a time-to-digital converter (TDC) 313; and the transimpedance amplifier 311 is configured to receive the current signal output by the cathode of the laser beam detector 21, amplify the current signal and convert the current signal into an analog voltage signal. The comparator 312 is connected to the output terminal of the transimpedance amplifier 311, and configured to receive the analog voltage signal, compare the analog voltage signal with a preset threshold comparison voltage, and output a low level to the time-to-digital converter 313 when the analog voltage signal does not exceed the threshold comparison voltage, or output a high level to the time-to-digital converter (TDC) 313 when the analog voltage signal exceeds the threshold comparison voltage. The high level can be used to indicate that the laser beam detector 21 receives the reflected laser beam signal. The time-to-digital converter 313 is connected to the output terminal of the comparator 312, and is configured to receive the high-level or low-level signal output by the comparator 312, and further generate a digital signal for characterizing a time interval of time of fight by using the high level output by the comparator, and the output terminal is connected to the digital signal processing unit 32. The digital signal processing unit 32 is configured to calculate a time interval between emission of the laser beam signal by the laser beam emitter and receiving of the reflected laser beam signal by the laser beam detector 21 based on the digital signal that can characterize the time interval of the time of fight, to accurately obtain related information of the target detected object based on the time interval, for example, parameters such as distance, azimuth, height, speed, attitude and shape of the target detected object, thereby detecting, tracking and identifying an aircraft, a missile and other targets.

According to a third aspect, this application also provides LiDAR, where the LiDAR includes the foregoing laser beam receiving circuit and further includes a laser beam emission circuit, and the laser beam emission circuit includes:
a laser beam emission module, including one or more laser beam emitters; and
an emission drive circuit, connected to the laser beam emitter in the laser beam emission module and configured to drive the laser beam emitter to emit a laser beam signal, where
the laser beam detector 21 in the laser beam detection module 20 is configured to receive a laser beam signal formed after a laser beam signal emitted by the laser beam emitter is reflected by a target object.

In an optional embodiment, the laser beam detection module 20 includes at least one two-dimensional detector array, and the two-dimensional detector array includes M rows and N columns of laser beam detectors 21, that is, M*N laser beam detectors 21, where the M*N laser beam detectors 21 are arranged into a two-dimensional array, M and N are both positive integers, M≥2, and N≥2. The M rows of laser beam detectors 21 in the M*N two-dimensional detector array include K detection units arranged in sequence along a row direction, respectively denoted as a first detection unit 211, a second detection unit 212, ..., a K^{th} detection unit 21K. The first detection unit 211 to the K^{th} detection unit 21K all include m_{K} rows and N columns of laser beam detectors 21 (that is, m_{K}^{∗}N laser beam detectors 21), where m_{K}^{∗}K=M, K and m_{K} are both positive integers, 2≤K≤M, and 1≤m_{K} <M. Anodes of the laser beam detectors 21 in the m_{K} rows and N columns in the same detection unit are electrically connected and extended into a shared anode terminal, and a total of K shared anode terminals are extended from the first detection unit 211, the second detection unit 212, ..., the K^{th} detection unit 21K. The n^{th} column of laser beam detectors 21 of the k^{th} detection unit 21k include m_{K} laser beam detectors arranged along a column direction, respectively denoted as 21k_1n, ..., 211_m_{K}n, where n is a positive integer, and n=1, 2, ..., N. The m_{K} laser beam detectors included in laser beam detectors 211_1n to 211_m_{K}n in the n^{th} column of the first detection unit 211, the m_{K} laser beam detectors included in laser beam detectors 212_1n to 212_m_{K}n in the n^{th} column of the second detection unit 212, ..., the m_{K} laser beam detectors included in laser beam detectors 21K_1n to 21K_m_{K}n in the n^{th} column of the K^{th} detection unit are in a one-to-one correspondence, to form m_{K} laser beam detector groups. Cathodes of K laser beam detectors 21 in the same laser beam detector group are electrically connected and extended into a shared cathode terminal. Further, the m_{K} laser beam detector groups formed by the m_{K} laser beam detectors included in the laser beam detectors 211_1n to 211_m_{K}n in the n^{th} column of the first detection unit 211, the m_{K} laser beam detectors included in the laser beam detectors 212_1n to 212_m_{K}n in the n^{th} column of the second detection unit 212, ..., the laser beam detectors 21K_1n to 21K_m_{K}n in the n^{th} column of the K^{th} detection unit are extended into a total of m_{K} shared cathode terminals. Further, the first detection unit 211, the second detection unit 212, ..., the K^{th} detection unit 21K each include N columns of laser beam detectors 21, which are extended into a total of N^{∗}m_{K} shared cathode terminals.

The laser beam emission module includes at least one two-dimensional emitter array, the two-dimensional emitter array includes laser beam emitters arranged into a two-dimensional array, anodes of laser beam emitters in the same row in the two-dimensional emitter array are electrically connected and extended into a shared emission anode terminal, and cathodes of laser beam emitters in the same column in the two-dimensional emitter array are electrically connected and extended into a shared emission cathode terminal; the emission drive circuit includes multiple anode addressing drive circuits, and the multiple anode addressing drive circuits are respectively one-to-one connected to multiple shared anode terminals extended from the two-dimensional emitter array, and are configured to perform anode addressing driving on multiple rows of laser beam emitters in the two-dimensional emitter array; and the emission drive circuit also includes multiple cathode addressing drive circuits, and the multiple cathode addressing drive circuits are respectively one-to-one connected to multiple shared cathode terminals extended from the two-dimensional emitter array, and are configured to perform cathode addressing driving on multiple columns of laser beam emitters in the two-dimensional emitter array.

The laser beam emitter in the two-dimensional emitter array emits a laser beam signal under addressing drive of the emission drive circuit; and the laser beam detector in the two-dimensional detector array is in a reverse breakdown state under addressing drive of the receiving drive circuit, and the laser beam detector in the reverse breakdown state outputs a current signal to the signal processing module after receiving the laser beam signal reflected by the target object.

### Embodiment 2

A difference between this embodiment of this application and Embodiment 1 is as follows: The laser beam detection module 20 includes at least one one-dimensional detector array, and the one-dimensional detector array includes N laser beam detectors, where N is a positive integer, and N≥2; and anodes of the N laser beam detectors are electrically connected and extended into a shared anode terminal.

In this embodiment, the receiving drive circuit also includes:
a second switch module, including N second switches, where terminals of the N second switches are respectively connected to cathodes of the N laser beam detectors one to one, and other terminals are all connected to an output terminal of the cathode drive voltage output module.

In this embodiment, the first current limiting module includes a first current limiting resistor, the first current limiting resistor is connected in series between the output terminal of the anode drive voltage output module and the shared anode terminal of the one-dimensional detector array; and the second current limiting module includes N second current limiting resistors, and the N second current limiting resistors are respectively connected in series with the N second switches.

In this embodiment, the signal processing module includes N analog signal processing circuits and one digital signal processing circuit; input terminals of the N analog signal processing circuits are in a one-to-one correspondence with N shared cathode terminals extended from a one-dimensional detector array, and output terminals are all connected to the digital signal processing circuit, or the signal processing module includes a signal gating unit, an analog signal processing circuit, and a digital signal processing circuit that are sequentially connected; an input terminal of the signal gating unit is connected to the N shared cathode terminals extended from the one-dimensional detector array, and an output terminal is connected to the input terminal of the analog signal processing circuit, and is configured to select a current signal of one of the N shared cathode terminals by time and output the current signal to the analog signal processing circuit; and an output terminal of the analog signal processing circuit is connected to the input terminal of the signal processing circuit.

In this embodiment, the laser beam emission module includes at least one one-dimensional emitter array, anodes of laser beam emitters included in the one-dimensional emitter array are electrically connected and extended into a shared emission anode terminal, cathodes are respectively one-to-one connected to cathode addressing drive circuits, and addressing driving is performed on the one-dimensional emitter array through the cathode addressing drive circuits. Alternatively, the anodes of the laser beam emitters included in the one-dimensional emitter array are respectively one-to-one connected to anode addressing drive circuits, the cathodes are electrically connected and extended into a shared emission cathode terminal, and addressing driving is performed on the one-dimensional emitter array through the anode addressing drive circuit.

## Claims

1. A receiving drive circuit, applied to a laser beam detection module, wherein the laser beam detection module comprises one or more laser beam detectors, the receiving drive circuit comprises a drive voltage output module, and the drive voltage output module comprises:
an anode drive voltage output terminal, connected to an anode of a laser beam detector in the laser beam detection module and configured to output an anode drive voltage, wherein the anode drive voltage is a negative voltage, and an absolute value of the negative voltage is less than an absolute value of a reverse breakdown voltage of the laser beam detector; and
a cathode drive voltage output terminal, connected to a cathode of the laser beam detector in the laser beam detection module and configured to output a cathode drive voltage, wherein the cathode drive voltage is a positive voltage, and the positive voltage is less than the absolute value of the reverse breakdown voltage, wherein
the anode drive voltage and the cathode drive voltage jointly form a reverse bias voltage across two terminals of the laser beam detector, and an absolute value of the reverse bias voltage is greater than the absolute value of the reverse breakdown voltage of the laser beam detector.

2. The receiving drive circuit according to claim 1, wherein a difference between the absolute value of the reverse breakdown voltage and the absolute value of the negative voltage is within a first preset range, and the positive voltage is within a second preset range.

3. The receiving drive circuit according to claim 2, wherein the first preset range is (0V, 1V), and the second preset range is (0V, 5V).

4. The receiving drive circuit according to claim 1, wherein a cathode drive voltage output by the drive voltage output module is adjustable.

5. The receiving drive circuit according to any one of claims 1 to 4, wherein the laser beam detection module comprises at least one two-dimensional detector array, and the two-dimensional detector array comprises M rows and N columns of laser beam detectors, wherein M and N are positive integers, M≥2, and N≥2;
the two-dimensional detector array is divided into K detection units along a row direction, each detection unit comprises m_{K} rows of laser beam detectors, and each detection unit comprises m_{K} laser beam detectors arranged along a column direction in an n^{th} column, wherein m_{K}^{∗}K=M, K, m_{K} and n are positive integers, 2≤K≤M, 1≤m_{K}<M, and n=1, 2, ..., N; anodes of the m_{K} rows of laser beam detectors in a same detection unit are electrically connected and extended into a shared anode terminal; the m_{K} laser beam detectors respectively comprised in the K detection units in the n^{th} column are in a one-to-one correspondence, to form m_{K} laser beam detector groups, and the N columns of laser beam detectors of the two-dimensional laser array form m_{K}^{∗}N laser beam detector groups; and cathodes of the m_{K} laser beam detectors in a same laser beam detector group are electrically connected and extended into a shared cathode terminal; and
the receiving drive circuit further comprises:
a first switch module, comprising K first switches, wherein terminals of the K first switches are respectively connected, in a one-to-one manner, to K shared anode terminals that are extended from the two-dimensional detector array, and other terminals are all connected to the anode drive voltage output terminal; and
a second switch module, comprising m_{K}^{∗}N second switches, wherein terminals of the m_{K}^{∗}N second switches are respectively connected, in a one-to-one manner, to m_{K}^{∗}N shared cathode terminals that are extended from the two-dimensional detector array, and other terminals are all connected to the cathode drive voltage output terminal.

6. The receiving drive circuit according to claim 5, wherein the receiving drive circuit further comprises:
a first current limiting module, comprising K first current limiting resistors, wherein the K first current limiting resistors are respectively connected in series with the K first switches; and
a second current limiting module, comprising m_{K}^{∗}N second current limiting resistors, wherein the m_{K}^{∗}N second current limiting resistors are respectively connected in series with the m_{K}^{∗}N second switches.

7. The receiving drive circuit according to any one of claims 1 to 4, wherein the laser beam detection module comprises at least one one-dimensional detector array, and the one-dimensional detector array comprises N laser beam detectors, wherein N is a positive integer, and N≥2,
anodes of the N laser beam detectors comprised in the one-dimensional detector array are electrically connected and extended into a shared anode terminal, and a cathode of each laser beam detector is extended into a shared cathode terminal; and
the receiving drive circuit further comprises:
a second switch module, comprising N second switches, wherein terminals of the N second switches are respectively connected, in a one-to-one manner, to cathodes of the N laser beam detectors, and other terminals are all connected to the cathode drive voltage output terminal.

8. The receiving drive circuit according to claim 7, wherein the receiving drive circuit further comprises:
a first current limiting module, comprising a first current limiting resistor, wherein the first current limiting resistor is connected in series between the anode drive voltage output terminal and the anode of the laser beam detector; and
a second current limiting module, comprising N second current limiting resistors, wherein the N second current limiting resistors are respectively connected in series with the N second switches.

9. A laser beam receiving circuit, comprising the receiving drive circuit and the laser beam detection module according to any one of claims 1 to 8.

10. The laser beam receiving circuit according to claim 9, wherein when: the laser beam detection module comprises at least one two-dimensional detector array, and the two-dimensional detector array comprises M rows and N columns of laser beam detectors, wherein M and N are positive integers, M≥2, and N≥2; and the two-dimensional detector array is divided into K detection units along a row direction, each detection unit comprises m_{K} rows of laser beam detectors, and each detection unit comprises m_{K} laser beam detectors arranged along a column direction in an n^{th} column, wherein m_{K}^{∗}K=M, K, m_{K} and n are all positive integers, 2≤K≤M, 1≤m_{K}<M, and n=1, 2, ..., N,
m_{K}=1 and K=M; anodes of the laser beam detectors in the same row are electrically connected and extended into a shared anode terminal; the first switch module comprises M first switches, terminals of the M first switches are respectively connected, in a one-to-one manner, to M shared anode terminals that are extended from M rows of the laser beam detectors, and other terminals are all connected to the anode drive voltage output terminal; cathodes of the laser beam detectors in the same column are electrically connected and extended into a shared cathode terminal; and the second switch module comprises N second switches, terminals of the N second switches are respectively connected, in a one-to-one manner, to the N shared cathode terminals that are extended from N columns of laser beam detectors, and other terminals are all connected to the cathode drive voltage output terminal; or
m_{K}=2, K=M/2, M is a positive even number, and M≥4; anodes of the laser beam detectors in the same detection unit are electrically connected and extended into a shared anode terminal; the first switch module comprises M/2 first switches, terminals of the M/2 first switches are respectively connected, in a one-to-one manner, to M/2 shared anode terminals that are extended from M rows of the laser beam detectors, and other terminals are all connected to the anode drive voltage output terminal; cathodes of the laser beam detectors in a first row and an n^{th} column of the K detection units are electrically connected and extended into a shared cathode terminal, and cathodes of the laser beam detectors in a second row and the n^{th} column of the K detection units are electrically connected and extended into another shared cathode terminal; and the second switch module comprises 2N second switches, terminals of the 2N second switches are respectively connected, in a one-to-one manner, to the 2N shared cathode terminals that are extended from N columns of laser beam detectors, and other terminals are all connected to the cathode drive voltage output terminal; or
m_{K}>2, K=M/m_{K}, and M>4; anodes of the laser beam detectors in the same detection unit are electrically connected and extended into a shared anode terminal; the first switch module comprises M/m_{K} first switches, terminals of the M/m_{K} first switches are respectively connected, in a one-to-one manner, to M/m_{K} shared anode terminals that are extended from M rows of the laser beam detectors, and other terminals are all connected to the anode drive voltage output terminal; m_{K} laser beam detectors respectively comprised in M/m_{K} detection units in an n^{th} column are in a one-to-one correspondence, to form m_{K} laser beam detector groups; cathodes of the m_{K} laser beam detectors in the same laser beam detector group are electrically connected and extended into a shared cathode terminal; and the second switch module comprises m_{K}^{∗}N second switches, terminals of the mx*N second switches are respectively connected, in a one-to-one manner, to the mx*N shared cathode terminals that are extended from N columns of laser beam detectors, and other terminals are all connected to the cathode drive voltage output terminal.

11. The laser beam receiving circuit according to claim 9 or 10, wherein the laser beam detection module comprises one or more current signal output terminals; and the laser beam receiving circuit further comprises a signal processing module, and the signal processing module is connected to the current signal output terminal of the laser beam detection module, and configured to analyze and process a current signal output by the laser beam detection module;
when the laser beam detection module comprises multiple current signal output terminals, the signal processing module comprises multiple analog signal processing circuits and a digital signal processing circuit; the multiple analog signal processing circuits are in a one-to-one correspondence with the multiple current signal output terminals of the laser beam detection module, input terminals are respectively connected to the multiple current signal output terminals in a one-to-one manner, and output terminals are all connected to the digital signal processing circuit, or the signal processing module comprises a signal gating unit, an analog signal processing circuit, and a digital signal processing circuit that are sequentially connected; an input terminal of the signal gating unit is connected to multiple current signal output terminals of the laser beam detection module, and is configured to select a current signal of the multiple current signal output terminals by time and output the current signal to the analog signal processing circuit, an input terminal of the analog signal processing circuit is connected to an output terminal of the signal gating unit, and an output terminal is connected to the digital signal processing circuit; when the laser beam detection module comprises a current signal output terminal, the signal processing module comprises an analog signal processing circuit and a digital signal processing circuit that are sequentially connected; and an input terminal of the analog signal processing circuit is connected to the current signal output terminal, and output terminals are all connected to the digital signal processing circuit; and
the analog signal processing circuit is configured to amplify the current signal and convert the current signal into an analog voltage signal, and is further configured to compare the analog voltage signal with a preset threshold comparison voltage, convert the analog voltage signal into a digital signal, and output the digital signal to the digital signal processing circuit.

12. A LiDAR device, comprising a laser beam emission circuit and the laser beam receiving circuit according to any one of claims 9 to 11, wherein the laser beam emission circuit comprises:
a laser beam emission module, comprising one or more laser beam emitters; and
an emission drive circuit, connected to the laser beam emitters in the laser beam emission module and configured to drive the laser beam emitters to emit laser beam signals,
wherein:
a laser beam detector is configured to receive a laser beam signal formed after a laser beam signal emitted by the laser beam emitter is reflected by a target object; and
when the laser beam emission module comprises at least one emitter array and the emitter array comprises multiple laser beam emitters arranged into an array, the emission drive circuit is configured to perform addressing and driving on the multiple laser beam emitters in the emitter array to emit light; the laser beam detection module comprises at least one detector array, and the detector array comprises multiple laser beam detectors arranged into an array; and under addressing and driving of the receiving drive circuit, the multiple laser beam detectors in the detector array receive the laser beam signal formed after the laser beam signal emitted by the laser beam emitter is reflected by the target object, and convert the received laser beam signal into a current signal.
